# EUROPEAN PATENT APPLICATION

(11) **EP 2 198 998 A1**
(43) Date of publication of application: **23.06.2010**
(21) Application number: 09178114.6
(22) Date of filing: 04.12.2009
(51) Int. Cl.: B23D 45/10, B23D 59/00, B27G 19/10

(54) **Method for the alignment of a cutting blade and a notching tool of a cutting machine for panels made of wood or the like, and cutting machine for panels made of wood or the like**

(30) Priority: 05.12.2008 IT BO20080735
(71) Applicant: BIESSE S.p.A., 61100 Pesaro (IT)
(72) Inventor: Lattanzi, Lorenzo, 61100 Pesaro (IT)
(74) Representative: Jorio, Paolo

(57) **Abstract**

The alignment of a cutting blade (10) and a notching tool (11) of a cutting machine for panels (2) made of wood is carried out by rotating the cutting blade (10), which has a plurality of teeth (14) and a maximum thickness axially limited by two end surfaces (15), mutually parallel and tangent to the teeth (14) themselves, about a longitudinal axis (13) thereof, moving a light ray (27) traversal to the axis (13) parallelly to the axis (13) itself, measuring the distances (D1, D2) of the light ray (27) from a reference plane (R) orthogonal to the axis (13) when the light ray (27) intercepts and disengages the end surfaces (15), respectively, and mutually aligning the cutting blade (10) and the notching tool (11) according to the measured distances (D1, D2).

## Description

The present invention relates to a method for the alignment of a cutting blade and a notching tool of a cutting machine for panels made of wood or the like.

In the wooden panel machining field, it is known to provide a cutting machine comprising a base defining a substantially horizontal supporting plane for a pack of panels made of wood or the like stacked one over the other; a cutting blade and a notching tool protruding in use over the supporting plane; and a supporting trolley adapted to move the cutting blade and the notching tool with a rectilinear reciprocating motion comprising an outward stroke, during which the notching tool arranged in front of the cutting blade in a feeding direction of the trolley, notches the lower surface of the panel pack and the cutting blade cuts the entire pack of panels, and a return stroke.

The cutting blade is mounted to rotate on a first longitudinal axis thereof, transversal to the feeding direction of the trolley, is provided with a plurality of first teeth spread about the first axis, and has a maximum thickness axially limited by two first end surfaces, mutually parallel, orthogonal to the first axis and tangent to the first teeth.

The notching tool is mounted to rotate on a second longitudinal axis parallel to the first axis, is provided with a plurality of second teeth spread about the second axis, and has a maximum thickness axially limited by two second end surfaces, mutually parallel, orthogonal to the second axis and tangent to the second teeth.

As the duration of the cutting blade is normally much shorter than the duration of the notching tool and should be frequently replaced, the cutting machine is further provided with an aligning unit, which determines at least the distances between the two first end surfaces and a reference plane, which is substantially orthogonal to the first and second axes, and aligns the cutting blade and the notching tool so as to center the cut carried out by the cutting blade into the notch made by the notching tool.

A first aligning unit of known type, described for example in European patent EP-1066906-B1, comprises two optical devices, each of which faces, in use, a corresponding first end surface, allows to determine the distance of the corrisponding first end surface of the mentioned reference plane, and comprises a respective light source adapted to generate a light beam substantially parallel to the first axis, and a respective receiver adapted to detect the intensity of the light beam reflected by the corresponding first end surface.

The aligning units of the above-described known type are relatively complex and costly due to the presence of two optical devices and are also relatively inaccurate because the intensity of the light beams reflected by the first end surfaces is strongly conditioned by the type of material of the cutting blade and by the possible presence of dust, shavings and/or machining waste which get between the first end surfaces, the light sources and the receivers.

A second aligning unit of known type, described for example in patent application WO-2007/104376-A1, comprises a camera mounted on the mentioned supporting trolley underneath the supporting plane and behind the cutting blade in the feeding direction of the supporting trolley during the mentioned outward stroke. The camera is operated while cutting a test panel for comparing the position of the notch made by the notching tool with the position of the cut made by the cutting tool, and thus allowing to align the cutting blade and the notching tool to each other.

The known aligning units of the above-described type have some drawbacks mainly deriving from that the alignment of cutting blade and notching tool requires to cut, and thus reject, a test panel each time and relatively long tooling times.

It is an object of the present invention to provide a method for the alignment of a cutting blade and a notching tool of a cutting machine for panels made of wood or the like which is free from the above-described drawbacks and which is simple and cost-effective to be implemented.

According to the present invention, there is provided a method for the alignment of a cutting blade and a notching tool of a cutting machine for panels made of wood or the like as claimed in claims from 1 to 8.

The present invention further relates to a cutting machine for panels made of wood or the like.

According to the present invention, there is provided a cutting machine for panels made of wood or the like as claimed in claims from 9 to 17.

The present invention will now be described with reference to the accompanying drawings, which illustrate a non-limitative embodiment thereof, in which:
figure 1 is a schematic front view of a preferred embodiment of the cutting machine of the present invention;
figure 2 is a schematic front view of a detail of the cutting machine in figure 1;
figure 3 is a schematic plan view of the detail in figure 2;
figure 4 is a schematic side view, with parts enlarged and parts removed for clarity, of the detail in figure 2; and

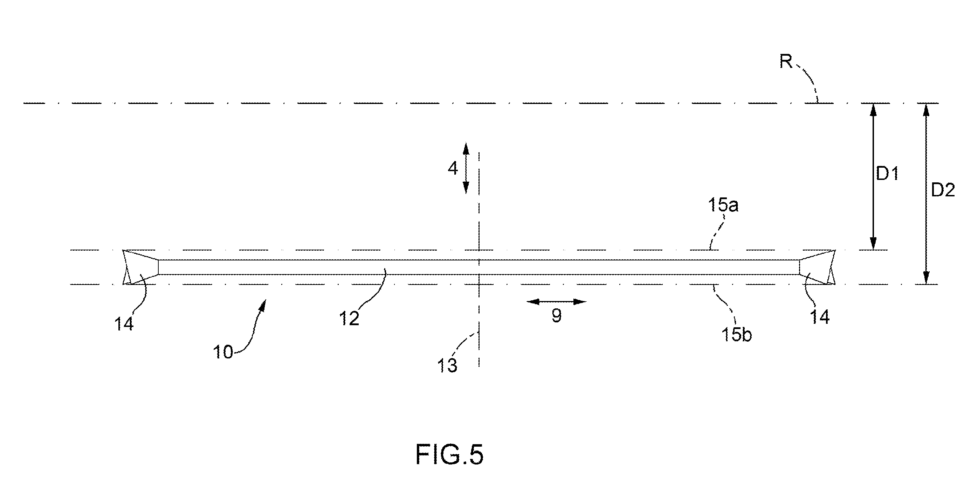

figure 5 schematically shows the operating principle of the detail in figure 2.

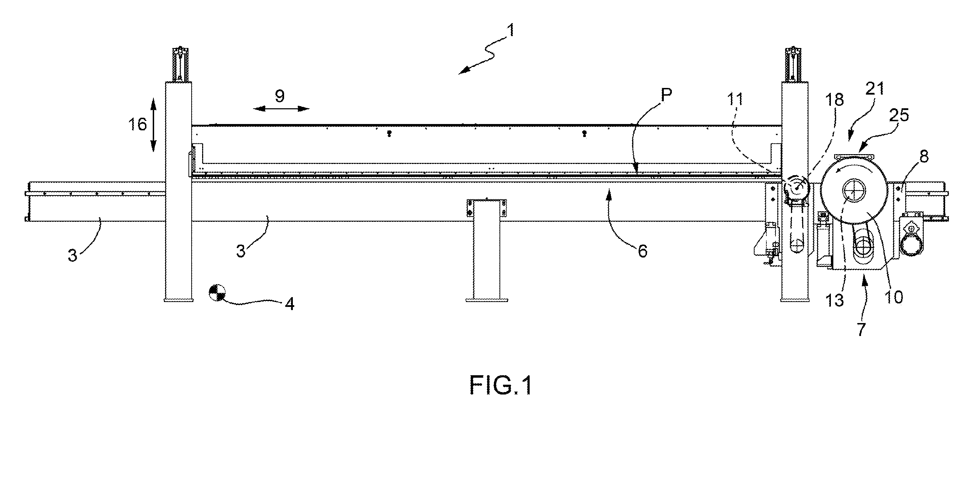

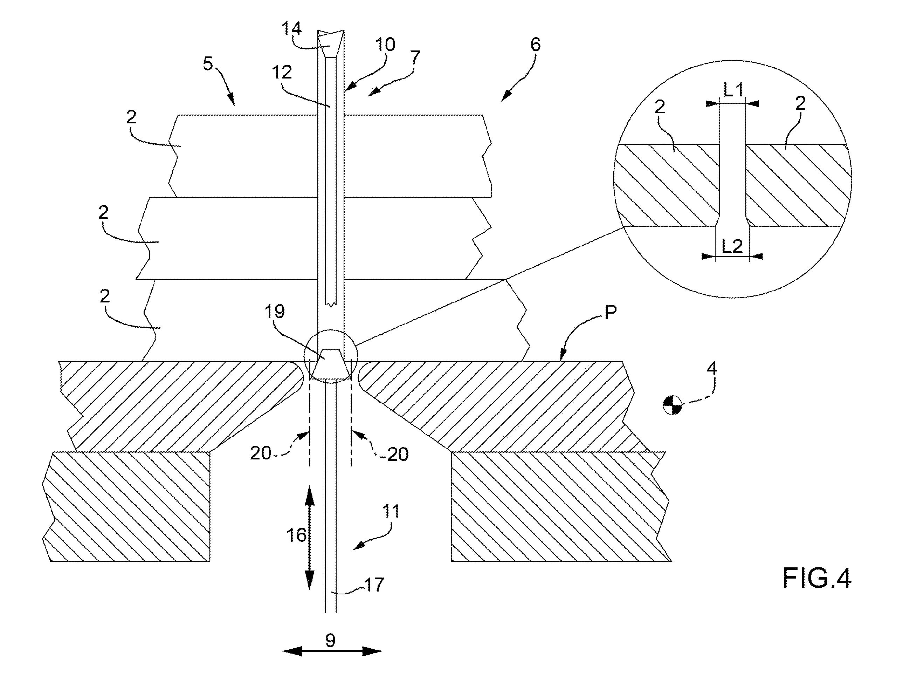

With reference to figure 1, numeral 1 indicates as a whole a cutting machine for panels 2 made of wood or the like (figure 4), having a substantially parallelepiped shape with a substantially rectangular section.

Machine 1 comprises an elongated base 3, which extends in a horizontal direction 4 orthogonal to the sheet plane in figure 1, defines a substantially horizontal supporting plane P for a pack 5 (figure 4) of panels 2, and cooperates with a feeding device (known and not shown) adapted to feed the pack 5 in direction 4 and through a cutting station 6 arranged along the base 3 itself.

Station 6 is provided with a cutting unit 7 comprising a trolley 8, which extends underneath the plane P, is coupled to base 3 in a known manner for carrying out, with respect to base 3 and under the bias of a known actuating device, rectilinear movements in a horizontal direction 9 transversal to direction 4, and supports a cutting blade 10 and a notching tool 11.

As shown in figure 4, blade 10 comprises a circular disc 12, which is mounted on the trolley 8 to rotate on a longitudinal axis 13 thereof, parallel to direction 4, and is provided with a plurality of trapezoidal teeth 14 mounted along a peripheral edge of disc 12 and spread around the axis 13, and is axially limited by two end surfaces 15, mutually parallel, orthogonal to the axis 13, and tangent to the teeth 14.

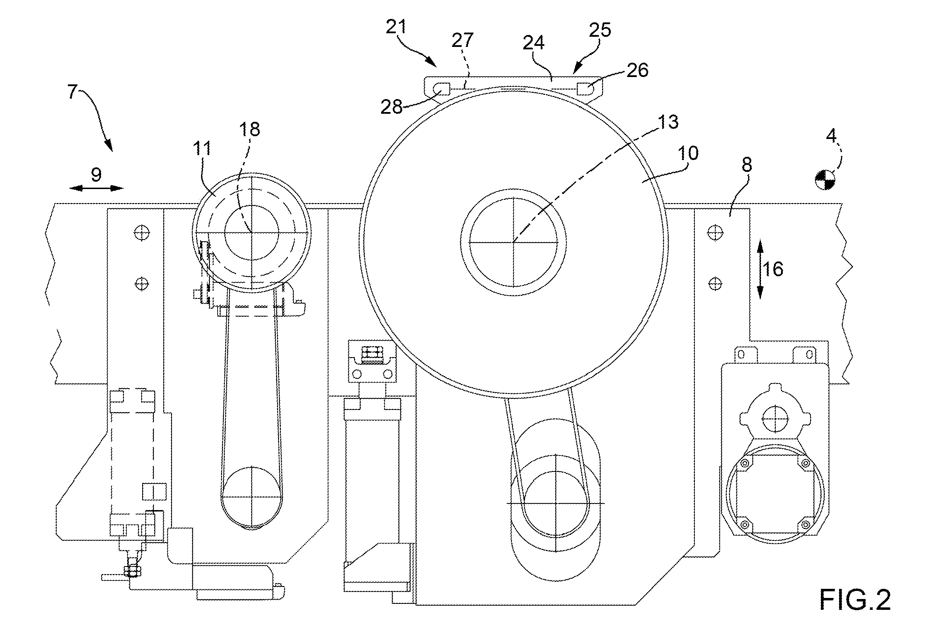

With reference to figure 2, disc 12 is further coupled to trolley 8 in a known manner for carrying out rectilinear movements with respect to trolley 8 and under the bias of a known actuating device, in a vertical direction 16 orthogonal to the directions 4 and 9 between a lowered resting position, in which the blade 10 is arranged underneath the plane P to allow the panels 2 to be fed along the plane P, and a raised operating position, in which the blade 10 protrudes over the plane P itself to cut the panels 2 of pack 5.

As shown in figure 4, the notching tool 11 comprises a circular disc 17, which is mounted on the trolley 8 to rotate about a longitudinal axis 18 thereof parallel to the axis 13, and is provided with a plurality of truncated cone-shaped teeth 19, which are mounted along a peripheral edge of the disc 17, are spread about the axis 18, and are made of long-life material, e.g. a diamond material. The notching tool 11 is axially limited by two end surfaces 20, mutually parallel, orthogonal to the axis 18, and tangent to the teeth 19.

With reference to figure 2, disc 17 is coupled to trolley 8 in a known manner for carrying out rectilinear movements in direction 4, with respect to the trolley 8 and under the bias of a known actuating device, and is further coupled to trolley 8 in a known manner for carrying out rectilinear movements, with respect to the trolley 8 and under the bias of a known actuating device, in direction 16 between a lowered resting position, in which the notching tool 11 is arranged underneath the plane P to allow panels 2 to be fed along the plane P, and a raised operating position, in which the blade 11 protrudes over the plane P itself to cut the panels 2 of pack 5.

Blade 10 and notching tool 11 are moved by the trolley 8 in direction 9 with a rectilinear reciprocating motion comprising an outward stroke, in which the notching tool 11, arranged in front of the blade 10 in the feeding direction 9 of trolley 8, notches the lower panel 2 of pack 5 and blade 10 cuts the panels 2 of the pack 5 itself, and a return stroke.

The cutting unit 7 cooperates with an aligning unit 21 adapted to determine at least the distances between the surfaces 15 and a reference plane R orthogonal to the direction 4 and adapted to align the blade 10 with the notching tool 11, i.e. to center the cut of width L1 made by the blade 10 with respect to the notch of width L2 made by the notching tool 11 (figure 4).

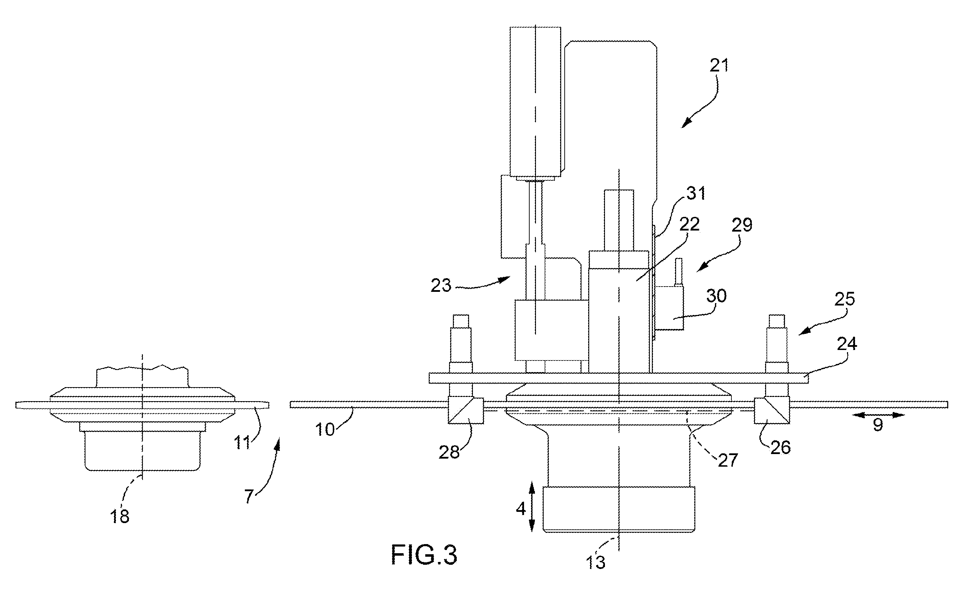

As shown in figure 3, unit 21 comprises a slide 22 coupled to base 3 in a known manner for carrying out rectilinear movements in direction 4 with respect to the base 3 and under the bias of an actuating device 23, a supporting plate 24 fixed to the slide 22 orthogonally to direction 4, and an optical device 25, in this case an optical laser device, mounted on the plate 24 itself.

The device 25 comprises an emitter 26 fixed to the plate 24 to generate a linear laser ray 27 parallel to direction 9, and a receiver 28 aligned with the emitter 26 in direction 9 for receiving the ray 27 itself.

According to variants (not shown), emitter 26 and receiver 28 which are mounted on a plane parallel to plane R ad orthogonal to direction 4, may be obviously aligned in directions other than direction 9 and transversal to the direction 4 itself.

Unit 21 further comprises a measuring device 29, which is adapted to determine the position of the ray 27 in direction 4, and comprises, in turn, a position sensor 30 of known type mounted on the slide 22 and a metric ruler 31 mounted on the base 3 parallelly to direction 4.

In use, whenever the blade 10 is replaced, the new blade 10 is correctly placed in direction 16 with respect to the optical device 25 according to the diameter of the blade 10 (figure 2), and the blade 10 itself is rotated about the axis 13 at a relatively high rotation speed as compared to the feeding speed of slide 22 in direction 4.

Slide 22 is thus moved in direction 4 to allow the ray 27 to firstly intercept the first end surface 15 (hereinafter indicated by numeral 15a), and then disengage the second end surface 15 (hereinafter indicated by 15b), and to allow the measuring device 29 to measure a distance D1 between the surface 15a and the plane R when the receiver 28 is blacked out by the surface 15a, and a distance D2 between the surface 15b and the plane R itself when the ray 27 reaches the receiver 28 again.

The values D1 and D2 of the distances of surfaces 15a and 15b from plane R may further be used by a calculating device (not shown) to calculate the thickness of blade 10.

Once the distances D1 and D2 have been acquired, the notching tool 11 whose initial position in direction 4 is normally known, is moved in direction 4 so as to be aligned with blade 10 and to centre the cut of width L1 made by the blade 10 with the notch of width L2 made by the notching tool 11 itself (figure 4).

With regards to the above, it is worth noting that width L2 is selectively controlled by moving the notching tool 11 with respect to the plane P in direction 16.

The above-described operating sequence may be obviously repeated to also measure the distance of each surface 20 from the plane R and to calculate the thickness of the notching tool 11.

## Claims

1. Method for the alignment of a cutting blade (10) and a notching tool (11) of a cutting machine for panels (2) made of wood or the like, the method comprising the steps of:
rotating the cutting blade (10) on its own first longitudinal axis (13), the cutting blade (10) having a plurality of first teeth (14) spread around the first axis (13) and a maximum thickness axially limited by two first end surfaces (15), mutually parallel, orthogonal to the first axis (13) and tangent to first teeth (14);
determining the distance (D1, D2) between each first end surface (15) and a reference plane (R) substantially orthogonal to the first axis (13) by means of an optical device (25); and
mutually moving the cutting blade (10) and the notching tool (11) in a direction (4) substantially parallel to the first axis (13) and depending on said distances (D1, D2) in order to align the cutting blade (10) and the notching tool (11);
and being **characterized in that** it further comprises the steps of:
creating, by means of the optical device (25), a light ray (27) substantially linear and transversal to the first axis (13);
mutually moving the light ray (17) and the cutting blade (10) in the direction (4) in order to intercept one of the first end surfaces (15) and to disengage the other first end surface (15); and
measuring the distances (D1, D2) between the light ray (27) and the reference plane (R) when the light ray (27) intercepts and, respectively, disengages the two first end surfaces (15).

2. Method according to Claim 1, wherein the cutting blade (10) is stationary in the direction (4), the method further comprising the step of:
moving the light ray (27) in the direction (4).

3. Method according to Claim 1 or 2, wherein the cutting blade (10) is stationary in the direction (4), the method further comprising the step of:
moving the notching tool (11) in the direction (4).

4. Method according to any one of the preceding Claims, further comprising the step of:
calculating the maximum thickness of the cutting blade (10) by means of the distances (D1, D2) between the first end surfaces (15) and the reference plane (R).

5. Method according to any one of the preceding Claims, further comprising the steps of:
rotating the notching tool (11) on its own second longitudinal axis (18), the notching tool (11) having a plurality of second teeth (19) spread around the second axis (18) and a maximum thickness axially limited by two second end surfaces (20), mutually parallel, orthogonal to the second axis (18) and tangent to second teeth (19);
mutually moving the light ray (27) and the notching tool (11) in the direction (4) in order to intercept one of the second end surfaces (20) and to disengage the other second end surface (20); and
measuring the distances between the light ray (27) and the reference plane (R) when the light ray (27) intercepts and, respectively, disengages the two second end surfaces (20).

6. Method according to Claim 5, further comprising the following step:
calculating the maximum thickness of the notching tool (11) by means of the distances between the second end surfaces (15) and the reference plane (R).

7. Method according to any one of the preceding Claims, further comprising the following step:
selectively controlling the vertical position of the notching tool (11) with respect to a supporting plane (P) of panels (2).

8. Method according to any one of the preceding Claims, wherein the optical device (25) comprises an emitter (25) and a receiver (28) for the laser light generated by the emitter (26) itself.

9. Cutting machine for panels (2) made of wood or the like, the machine comprising a cutting blade (10), which is able to rotate on its own first longitudinal axis (13), is provided with a plurality of first teeth (14) spread around the first axis (13), and has a maximum thickness axially limited by two first end surfaces (15), mutually parallel, orthogonal to the first axis (13) and tangent to first teeth (14); a notching tool (11) which is able to rotate on its own second longitudinal axis (18), is provided with a plurality of second teeth (19) spread around the second axis (18), and has a maximum thickness axially limited by two second end surfaces (20) mutually parallel, orthogonal to the second axis (18) and tangent to second teeth (19); a trolley (8) to transversally move the cutting blade (10) and the notching tool (11) with respect to the relative first and second axis (13, 18) to cut at least a panel (2) made of wood or the like; and an aligning unit (21) to determine at least the distances (D1, D2) between the two first end surfaces (15) and a reference plane (R), substantially orthogonal to the first and to the second axis (13, 18) and to mutually align the cutting blade (10) and the notching tool (11); and being **characterized in that** the aligning unit (21) comprises an optical device (25) to create a light ray (27) substantially linear and transversal to the first and the second axis (13, 18), an operating device (22) to mutually move the light ray (27) and the cutting blade (10) in a direction (4) substantially parallel to the first and the second axis (13, 18) in order to intercept one of the first end surfaces (15) and to disengage the other first end surface (15), and a measuring device (29) to measure the distances (D1, D2) between the light ray (27) and the reference plane (R) when the light ray (27) intercepts and, respectively, disengages the two first end surfaces (15).

10. Cutting machine according to Claim 9, wherein the cutting blade (10) is stationary in the direction (4) and the light ray (27) is movable in the direction (4).

11. Cutting machine according to Claim 9 or 10, wherein the cutting blade (10) is stationary in the direction (4) and the notching tool (11) is movable in the direction (4).

12. Cutting machine according to any one of Claims 9-11, further comprising a calculating device to calculate the maximum thickness of the cutting blade (10) by means of the distances (D1, D2) between the first end surfaces (15) and the reference plane (R).

13. Cutting machine according to any one of Claims 9-12, wherein the aligning unit (21) is movable with respect to the notching tool (11) to determine the distances between the two second end surfaces (20) and the reference plane (R).

14. Cutting machine according to Claim 12, further comprising a calculating device to calculate the maximum thickness of the notching tool (11) by means of the distances between the second end surfaces (20) and the reference plane (R).

15. Cutting machine according to any one of Claims 9-14, further comprising an operating device to selectively control the vertical position of the notching tool (11) with regard to a supporting plane (P) of panels (2).

16. Cutting machine according to any one of Claims 9-15, wherein the optical device (25) comprises an emitter (26) and a receiver (28) of laser light generated by the emitter (26) itself; the emitter (26) and the receiver (28) being mutually aligned in a further direction transversal to the first and the second axis (13, 18).

17. Cutting machine according to Claim 16, wherein the emitter (26) and the receiver (28) are arranged in a containment plane substantially parallel to the reference plane (R).
